# EUROPEAN PATENT APPLICATION

(11) **EP 2 236 482 A2**
(43) Date of publication of application: **06.10.2010**
(21) Application number: 10250595.5
(22) Date of filing: 26.03.2010
(51) Int. Cl.: C04B 38/00, F01N 3/28

(54) **Ceramic honeycomb structure**

(30) Priority: 26.03.2009 JP 2009075779
(71) Applicant: NGK Insulators, Ltd., Nagoya-city, Aichi 467-8530 (JP)
(72) Inventor: Ohara, Etsuji, Nagoya City Aichi-ken, 467-8530 (JP); Ichikawa, Yukihito, Nagoya City Aichi-ken, 467-8530 (JP); Hirose, Shogo, Nagoya City Aichi-ken, 467-8530 (JP); Hayashi, Shinzou, Nagoya City Aichi-ken, 467-8530 (JP)
(74) Representative: Paget, Hugh Charles Edward

(57) **Abstract**

There is disclosed a ceramic honeycomb structure which is not easily damaged and is excellent in durability even in a case where irregular canning conditions such as an overload and an offset load are generated. The ceramic honeycomb structure has a cell tilt angle of 0.5° or more and 35° or less and a substantially elliptic or oblong sectional shape vertical to a central axis direction.

## Description

### BACKGROUND OF THE INVENTION

### 1. Field of the Invention

The present invention relates to a ceramic honeycomb structure having an elliptic or oblong sectional shape and used as a filter or a catalyst carrier.

### 2. Description of the Related Art

A honeycomb structure made of a ceramic material (hereinafter referred to as the ceramic honeycomb structure) is broadly used in a catalyst carrier, various filters and the like. In recent years, the honeycomb structure has received attention especially as a diesel particulate filter (DPF) for collecting a particulate matter (PM) discharged from a diesel engine.

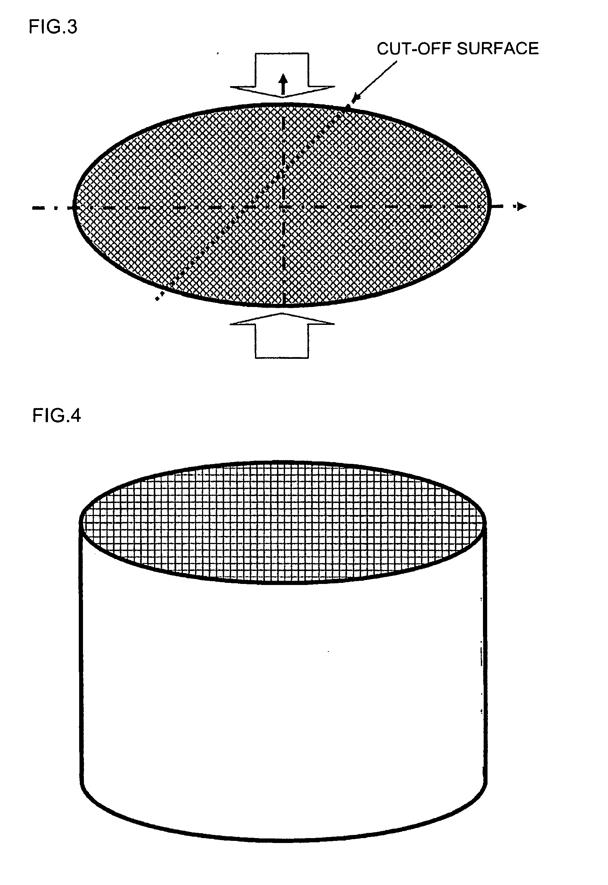

Such a ceramic honeycomb structure usually has a columnar shape as shown in Fig. 4. When the structure is used as the catalyst carrier or the filter, for example, the peripheral surface of the structure is held by using a compressive mat which is a holding member, and the structure received in a metal container is incorporated in an exhaust system.

As a method (a canning method) for receiving the ceramic honeycomb structure in the metal container, a method such as clamshell, push-in, wind-up or swaging is known (see Patent Documents 1 and 2). In any of the methods, when the structure is incorporated in the exhaust system, the structure continuously receives large vibration. Therefore, the structure is held with a large force so that the structure does not fall away owing to the vibration.

Moreover, a planar pressure is applied to the outer peripheral surface of the ceramic honeycomb structure via the holding member having compressibility in the metal container, and such a planar pressure generates a compressive stress in the ceramic honeycomb structure. At this time, when a gap between the metal container and the ceramic honeycomb structure is excessively small, the planar pressure becomes excessively large, and cell partition walls of the ceramic honeycomb structure cause buckling breakdown. Therefore, close attention is paid to the setting of the gap between the metal container and the ceramic honeycomb structure. Moreover, if the thickness of the holding member is non-uniform or compressive characteristics are not appropriate, the excessively large planar pressure is similarly generated sometimes.
Therefore, close attention is also paid to the setting of the thickness and the characteristics. In consequence, when the ceramic honeycomb structure is received in the metal container, the ceramic honeycomb structure is contrived so that the structure is not damaged.

The ceramic honeycomb structure often has a columnar outer shape, and hence the shape of the cross section of the structure vertical to the central axis thereof is usually round. However, when a catalyst or the filter is disposed in a narrow space in an engine room or under a passenger space floor in a car, a ceramic honeycomb structure having a substantially elliptic or oblong cross section is employed sometimes.

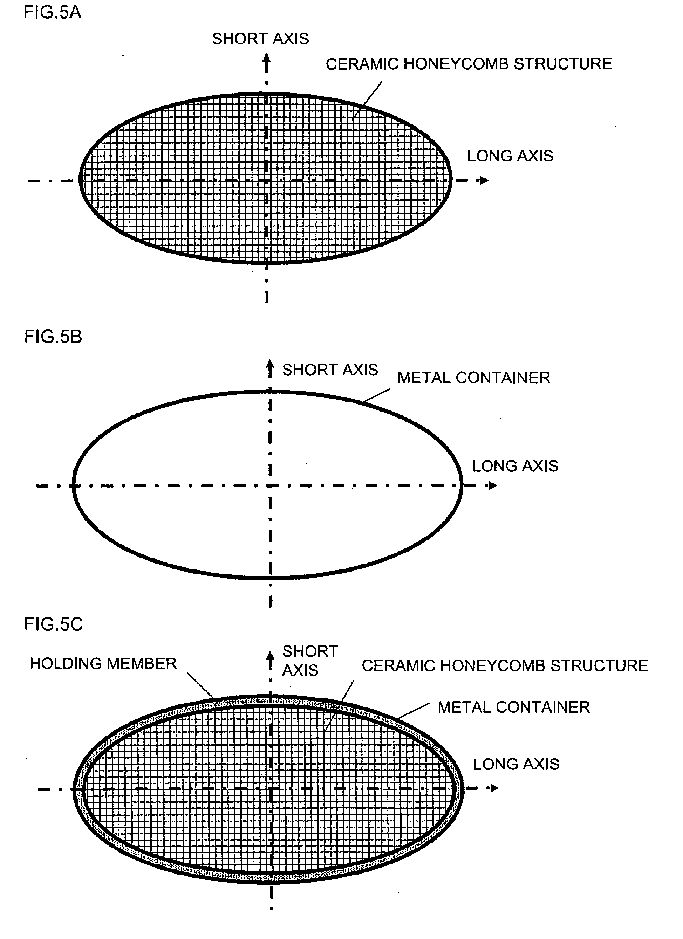

Heretofore, in such a ceramic honeycomb structure having the substantially elliptic or oblong cross section, as shown in Fig. 5A, partition walls are formed in parallel with the long axis direction and short axis direction of the cross section of the structure, and an angle formed by the partition walls with respect to a short axis and an angle formed by the partition walls with respect to a long axis are 0° (parallel). Moreover, when the ceramic honeycomb structure is held, as shown in Figs. 5B and 5C, the ceramic honeycomb structure is received via the holding member in the metal container so that the short axis direction of the ceramic honeycomb structure matches the short axis direction of the (closed cylindrical) metal container. It is to be noted that examples of prior art documents include Patent Documents 1 and 2.

[Patent Document 1] W02003/078026A1
[Patent Document 2] JP-A-1-216010

### SUMMARY OF THE INVENTION

A technology disclosed in Patent Document 1 is directed to a ceramic filter assembly which is **characterized in that** the long and short sides of a honeycomb filter are disposed in parallel with the long and short diameters of the assembly, respectively, but there is seen a case where during canning, the honeycomb filter made of a ceramic material breaks down owing to an offset load.

Moreover, a technology disclosed in Patent Document 2 is directed to a ceramic honeycomb structure which is **characterized in that** the outer shape of the structure is disposed in parallel with an offset load of 45 degrees, thereby alleviating the load. However, during the canning in a state in which the ceramic honeycomb structure is shifted from the center of a case, there is seen a case where the ceramic honeycomb structure breaks down owing to the offset load.

In this way, meticulous contrivances are actually made so that the ceramic honeycomb structure is not damaged in a canning process in which the ceramic honeycomb structure is received via a holding member in a container made of a metal, but a canning load becomes an overload or an offset load, whereby an excessively large planar pressure is applied to the peripheral surface of the ceramic honeycomb structure sometimes. In such a case, a shearing stress is exerted on partition walls, thereby damaging the partition walls.

The present invention has been developed in view of such problems which might occur during the canning in such conventional technologies, and an object thereof is to provide a ceramic honeycomb structure which is excellent in durability and which is not easily damaged even in a case where irregular canning conditions such as the above overload and offset load are generated. As a result of repeated investigations, it has been found out that the above object can be achieved by the ceramic honeycomb structure as follows.

That is, according to the present invention, there is provided a ceramic honeycomb structure comprising porous partition walls which form a plurality of cells as through channels for a fluid and an outer wall which surrounds the partition walls, and having a columnar outer shape and an elliptic or oblong cross section vertical to the central axis direction thereof, wherein an angle (also referred to as a cell tilt angle) formed by the partition walls with respect to a short axis of the shape of the cross section in the cross section vertical to the central axis direction is 0.5° or more and 35° or less.

In the ceramic honeycomb structure according to the present invention, the above angle (formed by the partition walls with respect to the short axis of the shape of the cross section in the cross section vertical to the central axis direction) is preferably 5° or more and 35° or less.

The ceramic honeycomb structure according to the present invention further comprises plugged portions which plug open frontal areas of predetermined cells among the plurality of cells in one end face of the structure and open frontal areas of the remaining cells in the other end face thereof, wherein the plugged portions are preferably provided so that the predetermined cells (having the open frontal areas plugged in the one end face) and the remaining cells (having the open frontal areas plugged in the other end face) are alternately disposed. Thus, when observing the end faces, the ceramic honeycomb structure has a configuration in which the plugged portions are seen as if they are provided in a zigzag or checkered pattern.

In the ceramic honeycomb structure according to the present invention, the partition walls have an average thickness of preferably 0.8 mm or less. The average thickness of the partition walls is more preferably 0.01 mm or more and 0.64 mm or less, and especially preferably 0.02 mm or more and 0.51 mm or less.

In the ceramic honeycomb structure according to the present invention, the partition walls have an average porosity of 10% or more. The average porosity of the partition walls is further preferably 20% or more and 70% or less, and especially preferably 30% or more and 60% or less.

In the ceramic honeycomb structure according to the present invention, a material of the partition walls preferably contains, as a main component, one or more selected from a material group consisting of cordierite, lithium aluminum silicate, aluminum titanate, alumina, zirconia, silicon carbide, silicon nitride, activated carbon, silica gel and zeolite.

In the ceramic honeycomb structure according to the present invention, the shape of the cross sections of the predetermined cells vertical to a longitudinal direction thereof is preferably different from that of the cross sections of the remaining cells vertical to the longitudinal direction.

In the ceramic honeycomb structure according to the present invention, a relation of A < B is preferably satisfied, in which A (mm²) is the total of areas of the cross sections of the predetermined cells vertical to the longitudinal direction, and B (mm²) is the total of areas of the cross sections of the remaining cells vertical to the longitudinal direction.

In a preferable configuration of the ceramic honeycomb structure according to the present invention, specifically, for example, the shape of the cross sections of the predetermined cells vertical to the longitudinal direction is quadrangular, the shape of the cross sections of the remaining cells vertical to the longitudinal direction is octagonal, and a relation of A < B is satisfied, in which A (mm²) is the total of the areas of the cross sections of the predetermined cells vertical to the longitudinal direction, and B (mm²) is the total of the areas of the cross sections of the remaining cells vertical to the longitudinal direction. Needless to say, the present invention is not limited to this example, and the ceramic honeycomb structure may be provided as follows.

That is, in the ceramic honeycomb structure according to the present invention, the shape of the cross sections of all the cells vertical to the longitudinal direction is preferably quadrangular.

The ceramic honeycomb structure according to the present invention has the columnar outer shape, and the substantially elliptic or oblong sectional shape vertical to the central axis direction. In the cross section of the structure vertical to the central axis direction, the angle formed by the partition walls with respect to the short axis of the sectional shape, that is, the cell tilt angle is 0.5° or more and 35° or less, preferably 5° or more and 35° or less. In consequence, in a case where the ceramic honeycomb structure is held, that is, in a case where the ceramic honeycomb structure is received via the holding member in the metal container so that the short axis direction of the ceramic honeycomb structure matches the short axis direction of the metal container, the direction of the partition walls of the ceramic honeycomb structure does not match the short axis direction of the metal container, and an angle equal to the cell tilt angle is formed. Therefore, even when irregular canning conditions such as an overload and an offset load are generated, the partition walls are not easily damaged.

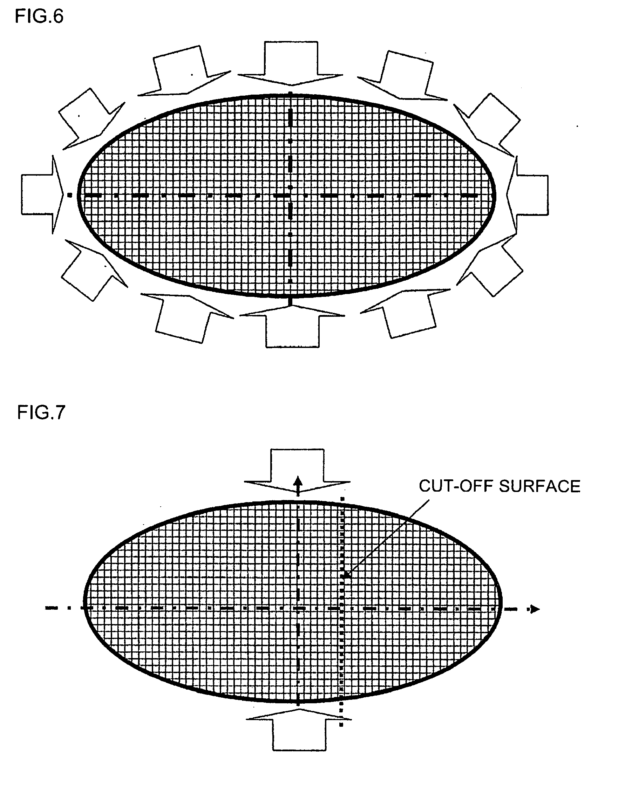

Unlike a metal material, the ceramic material of the ceramic honeycomb structure is a brittle material which is vulnerable to a shearing stress, and hence needs to avoid an excessively large shearing stress, but the conventional ceramic honeycomb structure is prepared so that the cell tilt angle with respect to the short axis direction is approximately less than 0.5 degree, and substantially 0 degree. In this case, when the load acts in the short axis direction during the canning, as shown in FIG. 7, the transverse cross section of the structure in the short axis direction becomes a cut-off surface, and the shearing stress acts in this direction, whereby the structure easily breaks down at a low value along the cut-off surface. That is, the partition walls parallel to the short axis direction often break down in a buckling manner. On the other hand, according to the ceramic honeycomb structure of the present invention, since the cell tilt angle is large, the cut-off surface lengthens, the shearing stress decreases, and hence the structure does not easily break down at the low value along the cut-off surface.

When the ceramic honeycomb structure is held, a holding load is applied in the normal direction of the outer contour curve of the ceramic honeycomb structure, and a loading direction varies in accordance with the curvature radius of the outer contour of the ceramic honeycomb structure. As shown in Fig. 6, in the substantially elliptic cross section of the structure, the loading direction substantially matches the short axis direction around the short axis, but the normal direction of the outer contour curve of the ceramic honeycomb structure shifts from the short axis direction toward the end of a long axis. Therefore, the holding load direction also shifts from the short axis direction. When the curvature radius of the outer contour curve of the ceramic honeycomb structure in the short axis direction increases, the substantially elliptic cross section is horizontally prolonged in the long axis direction, and the holding load direction shifts less from the short axis direction. When the curvature radius of the outer contour curve of the ceramic honeycomb structure is excessively large, the structure has a substantially oblong cross section (race track-like cross section). When the cross section is horizontally prolonged in the long axis direction in this manner, the curvature radius is comparatively small at the end portion in the long axis direction. Therefore, in the ceramic honeycomb structure according to the present invention, even when the angle (the cell tilt angle) formed by the cell partition walls with respect to the short axis direction is as small as 0.5 degree, the length increase ratio of the cut-off surface is supposed to be effectively large. That is, the low-value breakdown at the portion can be decreased. Moreover, when the cell tilt angle is increased, the effect of the ceramic honeycomb structure according to the present invention is exerted over the whole ceramic honeycomb structure.

As described above, the influence of the cell tilt angle varies in accordance with the dimension of the ceramic honeycomb structure along the short axis, the dimension thereof along the long axis and the curvature radius of the sectional contour shape, whereby in the ceramic honeycomb structure according to the present invention, the cell tilt angle can appropriately set based on these conditions. Moreover, the shearing strength of the cell structure varies in accordance with the partition wall thicknesses, cell pitches, and the strength and rigidity of the material of the partition walls. Therefore, the cell tilt angle can appropriately be set in consideration of these conditions.

In recent years, with the strengthening of regulations on an exhaust gas, various attempts have been made to improve the purification performance of the ceramic honeycomb structure used as a catalyst, filter, adsorber or the like for purifying the exhaust gas. In the ceramic honeycomb structure used as, for example, a catalyst member, an attempt is made to decrease the thicknesses of the partition walls and a heat capacity, whereby immediately after the start of an engine, a catalyst temperature is rapidly raised to improve a catalyst activity, and a desired exhaust gas purification performance is immediately exerted. Another attempt is made to increase the porosities of the partition walls and decrease the heat capacity, thereby improving the catalyst activity. Combinations of the thicknesses and porosities of the partition walls have intensely been investigated. In addition, also in the ceramic honeycomb structure used as a filter, for example, a diesel particulate filter (DPF) for collecting and removing a particulate material (also referred to as a particulate matter) included in a fluid such as the exhaust gas discharged from a diesel engine, a further attempt is intensely made to increase the porosities of the partition walls with the intention of improving a collection efficiency, catalyst carrying characteristics and the like. An additional attempt is intensely made to use a material having a large specific surface area in the ceramic honeycomb structure, thereby improving a chemical reactivity. However, the thinning of the partition walls, the increase of the porosities and the increase of the specific surface area described above bring about the decrease of the isostatic strength of the ceramic honeycomb structure. That is, it can be considered that the damage of the partition walls easily occurs, but according to the ceramic honeycomb structure of the present invention, the damage of the partition walls can be suppressed. In other words, according to the present invention, it is possible to provide the ceramic honeycomb structure having a large isostatic strength while satisfying demand for the improvement of the purification performance.

Moreover, in the ceramic honeycomb structure, examples of the sectional shape of the cells vertical to the longitudinal direction (referred to as the cell sectional shape) include polygonal shapes such as triangular, quadrangular and hexagonal shapes, a round shape, and a combination of quadrangular and octagonal shapes, and this difference of the cell sectional shape makes a difference in the strength characteristics of the ceramic honeycomb structure. As the cell sectional shape, the quadrangular shape or the combination of quadrangular and octagonal shapes is often used. When the load is received by the structure having such a cell sectional shape in the partition wall direction, the structure has a structural strength. However, in a direction in which an angle formed by the partition walls with respect to the short axis direction is about 45 degrees, the structure has a less structural strength. In the ceramic honeycomb structure according to the present invention, even when the cell sectional shape is the quadrangular shape or the combination of the quadrangular and octagonal shapes, the cell tilt angle is large. In consequence, the cut-off surface lengthens, the shearing stress decreases, and hence the structure does not easily break down at the low value along the cut-off surface. Moreover, the direction of the partition walls of the ceramic honeycomb structure does not match the short axis direction of the metal container, and an angle equal to the cell tilt angle is made, whereby the partition walls are not easily damaged even when irregular canning conditions are generated.

### BRIEF DESCRIPTION OF THE DRAWINGS

Fig. 1 is a perspective view showing a ceramic honeycomb structure according to the present invention;
Fig. 2 is a sectional view showing a cross section of the ceramic honeycomb structure according to the present invention vertical to a central axis direction thereof, and showing an angle (a cell tilt angle) of each cell partition wall with respect to a short axis direction;
Fig. 3 is a sectional view corresponding to Fig. 2, showing a main holding load applied to the ceramic honeycomb structure by arrows and showing a cut-off surface in a case where the ceramic honeycomb structure according to the present invention is received in a metal container;
Fig. 4 is a perspective view showing a conventional ceramic honeycomb structure;
Fig. 5A is a diagram showing the conventional ceramic honeycomb structure, and is a sectional view showing the cross section of the structure vertical to the central axis direction, and short and long axes thereof;
Fig. 5B is a diagram showing the metal container for receiving the ceramic honeycomb structure, and is a sectional view showing the cross section of the container vertical to the central axis direction, and short and long axes thereof;
Fig. 5C is a diagram showing a state in which the ceramic honeycomb structure shown in Fig. 5A is received in the metal container shown in Fig. 5B, and is a sectional view showing a cross section vertical to the central axis direction, and the short and long axes;
Fig. 6 is a sectional view corresponding to Fig. 5A, showing a holding load applied to the ceramic honeycomb structure by arrows in a case where the conventional ceramic honeycomb structure is received in the metal container;
Fig. 7 is a sectional view corresponding to Fig. 5A, showing a main holding load applied to the ceramic honeycomb structure by arrows and showing a cut-off surface in a case where the conventional ceramic honeycomb structure is received in the metal container;
Fig. 8 is a diagram showing the results of examples, and is a graph showing relations between cell tilt angles and isostatic breakdown strengths as the results of Examples 1 to 7 and Comparative Examples 1 and 2;
Fig. 9 is a diagram showing the results of examples, and is a graph showing relations between cell tilt angles and isostatic breakdown strengths as the results of Examples 8 to 14 and Comparative Examples 3 and 4;
Fig. 10A is a diagram for explaining examples, and showing positions A and B in the cross section of the ceramic honeycomb structure vertical to the central axis direction in Examples 16 and 17 and Comparative Example 6;
Fig. 10B is a diagram showing an enlarged part C (a square enclosure) of Fig. 10A, and is a diagram showing the position A of the ceramic honeycomb structure vertical to the central axis direction in Examples 16 and 17 and Comparative Example 6;
Fig. 11 is a diagram showing the results of the examples, and is a graph showing relations between cell tilt angles and differences of breaking lengths from a reference length as the results of examples 16 and 17 and Comparative Example 6; and
Fig. 12 is a constitution diagram schematically showing a shearing test by use of an all-purpose material tester manufactured by INSTRON Co., Ltd., in the examples (Examples 16 and 17, Comparative Example 6).

### DESCRIPTION OF THE PREFERRED EMBODIMENT

Hereinafter, an embodiment of the present invention will be described appropriately with reference to the drawings, but the present invention should not be limited to the embodiment when interpreted. Various alterations, modifications, improvements and replacements can be added based on the knowledge of a person with ordinary skill in the art without departing from the scope of the present invention. for example, the drawings show the preferable embodiment according to the present invention, but the present invention is not restricted by configurations or information shown in the drawings. To perform or verify the present invention, means similar or equivalent to that described in the present description can be applied, but preferable means is as follows.

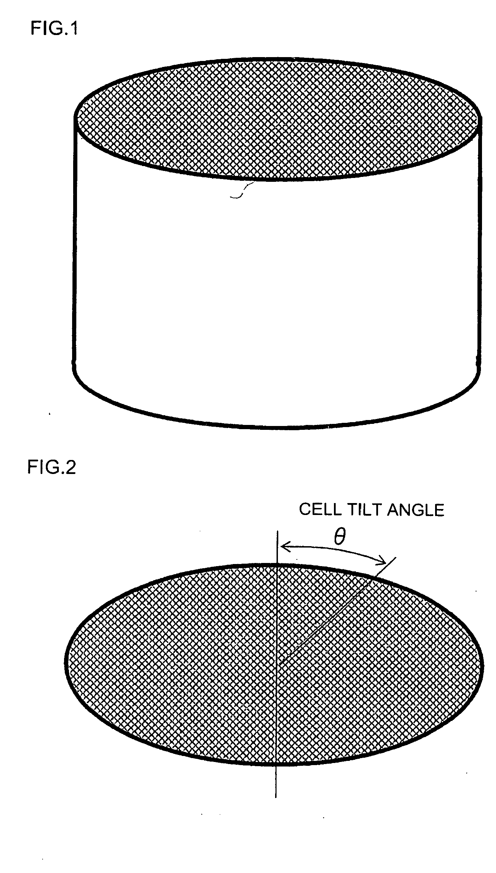

First, a ceramic honeycomb structure according to the present invention will be described. The ceramic honeycomb structure according to the present invention comprises porous partition walls which form a plurality of cells as through channels for a fluid and an outer wall which surrounds the partition walls, and has a columnar outer shape as shown in Fig. 1 and a substantially elliptic or oblong sectional shape vertical to a central axis direction as shown in Fig. 2. Moreover, in the cross section of the ceramic honeycomb structure according to the present invention vertical to the central axis direction, a cell tilt angle θ (see Fig. 2) is 0.5° or more and 35° or less, preferably 5° or more and 35° or less, especially preferably 10 degrees or more and 30 degrees or less.

In a preferable configuration of the present invention, the ceramic honeycomb structure comprises plugged portions which plug open frontal areas of predetermined cells among the plurality of cells in one end face of the structure and open frontal areas of the remaining cells in the other end face thereof. The plugged portions are preferably provided so that the predetermined cells and the remaining cells are alternately disposed.

Moreover, in the preferable configuration of the ceramic honeycomb structure according to the present invention, a cell sectional shape is preferably a quadrangular shape such as a square shape or a rectangular shape. The shape does not have to be a single shape, and may be, for example, a combination of octagonal and quadrangular shapes.

There is not any special restriction on a material of the partition walls constituting the ceramic honeycomb structure according to the present invention, as long as the material is a brittle material. However, when the structure is used in an environment exposed to high heat, for example, a catalyst or a DPF for purifying an exhaust gas from a car, the material of the partition walls preferably contains, as a main component, one selected from the group consisting of cordierite, lithium aluminum silicate, aluminum titanate, alumina, zirconia, silicon carbide, silicon nitride, activated carbon, silica gel and zeolite, generally judging from heat resistance, thermal shock resistance, structural strength and mass productivity.

Especially when the ceramic honeycomb structure according to the present invention is used as a catalyst member, the thicknesses of the partition walls are preferably 0.15 mm or less. The thicknesses of the partition walls are further preferably 0.12 mm or less, especially preferably 0.10 mm or less. When the thicknesses of the partition walls decrease, cracking easily occurs in the partition walls. Therefore, the ceramic honeycomb structure according to the present invention brings about a larger effect on conditions that the cracking more easily occurs, for example, the thicknesses of the partition walls are 0.15 mm or less. When the structure is used as the catalyst member, the average porosity of the partition walls is usually 35% or less from the viewpoint of material strength. However, to further improve the catalyst activity, the average porosity of the cell partition walls is further increased, thereby decreasing the heat capacity of the ceramic honeycomb structure sometimes.

Especially when the ceramic honeycomb structure according to the present invention is used as the DPF, to acquire gas permeability, the average porosity of the partition walls is preferably 40% or more, further preferably 45% or more, especially preferably 50% or more. When the average porosity of the partition walls increases, the strength of the material of the partition walls lowers, and the cracking easily occurs in the partition walls. Therefore, the ceramic honeycomb structure according to the present invention brings about a larger effect on the conditions that the cracking more easily occurs, for example, the average porosity of the partition walls is 40% or more. It is to be noted that the porosities of the partition walls mentioned in the present description are values measured by mercury porosimetry. When the structure is used as the DPF, the average thickness of the partition walls is usually 0.25 mm or more from the viewpoint of collection performance. However, to decrease air-flow resistance, the average thickness of the cell partition walls is further decreased sometimes.

The ceramic honeycomb structure according to the present invention may be a structure in which the partition walls and the outer wall surrounding the partition walls are integrally formed, or a structure in which an outer wall portion of the formed partition walls is coated, and hence there is not any special restriction on the structure.

The ceramic honeycomb structure according to the present invention has an integral type configuration in which the partition walls are integrally formed. In general, the ceramic honeycomb structure is, for example, a bonded type ceramic honeycomb structure having a configuration in which a plurality of honeycomb segments each comprising porous partition walls for forming a plurality of cells as through channels for a fluid and an outer wall for surrounding these partition walls and each having a columnar outer shape are combined via bonding material layers. However, such a configuration is unfavorable because a shearing stress is divided by the bonding material layers. The effect of the ceramic honeycomb structure according to the present invention is further exerted in the integral type configuration in which the partition walls are integrally formed.

In the ceramic honeycomb structure according to the present invention, there is not any special restriction on a cell density. However, if the cell density is excessively small, in the ceramic honeycomb structure used as a filter, strength and effective geometric surface area (GSA) run short sometimes. If the cell density is excessively large, a pressure loss during the flow of a fluid to be treated increases sometimes. The cell density is in a range of preferably 6 to 2000 cells/square inch (0.9 to 311 cells/cm²), further preferably 50 to 1000 cells/square inch (7.8 to 155 cells/cm²), especially preferably 10 to 600 cells/square inch (15.5 to 93.0 cells/cm²).

In the configuration of the ceramic honeycomb structure having the plugged portions according to the present invention, there is not any special restriction on the thicknesses of the plugged portions, that is, the lengths (depths) of the plugged portions in the long axis direction of the ceramic honeycomb structure, but the lengths are preferably from 1 to 20 mm. If the lengths are smaller than 1 mm, the strengths of the plugged portions remarkably lower sometimes, and a heat capacity tends to decrease. If the lengths are larger than 20 mm, the pressure loss of the structure used as the filter increases sometimes. The thicknesses of the plugged portions are further preferably from 2 to 10 mm, especially preferably from 3 to 7 mm.

Next, a method for manufacturing the ceramic honeycomb structure according to the present invention (also referred to as the manufacturing method of the ceramic honeycomb structure) will be described. In the manufacturing method of the ceramic honeycomb structure according to the present invention, first a forming material for forming a formed ceramic honeycomb-like article (referred to as the formed ceramic honeycomb article) is prepared. As a main forming material, a cordierite forming material having excellent heat resistance and low thermal expansion properties preferably contains the main material of a composition including 0 to 20 mass% of kaolin (Al₂O₃2SiO₂2H₂O) having an average particle diameter of 5 to 30 µm, 37 to 40 mass% of talc (3MgO4SiO₂H₂O) having an average particle diameter of 15 to 30 µm, 15 to 45 mass% of aluminum hydroxide having an average particle diameter of 1 to 30 µm, 0 to 15 mass% of aluminum oxide having an average particle diameter of 1 to 30 µm and 10 to 20 mass% of molten silica or quartz having an average particle diameter of 3 to 100 µm.

In the manufacturing method of the ceramic honeycomb structure according to the present invention, a desired additive may be added to the above ceramic material as the main material of the forming material, if necessary. Examples of the additive include a binder, a dispersant for promoting dispersion in a medium solution and a pore former for forming pores.

Examples of the binder include hydroxypropyl methylcellulose, methylcellulose, hydroxyethyl cellulose, carboxyl methylcellulose, polyvinyl alcohol and polyethylene terephthalate. Examples of the dispersant include ethylene glycol, dextrin, fatty acid soap and polyalcohol. Examples of the pore former include graphite, cokes, flour, starch, hollow or solid resin, fly ash balloon, silica gel, organic fiber, inorganic fiber and hollow fiber. These additives may be used alone or as a combination of two or more of them in accordance with a purpose.

As to the forming material for forming the formed ceramic honeycomb article, about 10 to 40 parts by mass of water is introduced into 100 parts by mass of mixed material powder containing the above main material and the additive added if necessary, followed by kneading, whereby a plastic mixture is obtained.

Next, this plastic mixture is formed into the formed ceramic honeycomb article. Examples of a forming method include extrusion-forming. This extrusion-forming can be performed by using a vacuum clay kneader, a ram type extrusion-forming machine, a biaxial screw type continuous extrusion-forming machine or the like.

Subsequently, the obtained formed ceramic honeycomb article is dried. The formed ceramic honeycomb article can be dried by any of various methods, and examples of the methods include hot air drying, microwave drying, dielectric drying, reduced pressure drying, vacuum drying, freeze drying and far infrared drying. In particular, the article is preferably dried by a combined method of the dielectric drying and hot air drying. Drying conditions are preferably a drying temperature of 30 to 150°C and a time of one minute to two hours. Afterward, both end faces of the formed ceramic honeycomb article dried in this manner are cut into a predetermined length. This formed ceramic honeycomb article is fired, thereby manufacturing the ceramic honeycomb structure of the present embodiment. Examples of a method for firing the formed ceramic honeycomb article include a firing method in which the temperature is raised up to 1350 to 1450°C in the atmosphere.

Next, the manufacturing method of the ceramic honeycomb structure having both the end faces plugged in a zigzag pattern. First, a plugging material for forming the plugged portions for plugging the opening ends of the cells is prepared. The plugging material for forming the plugged portions can be obtained by mixing the ceramic material, a surfactant, water, a sintering aid and the like, and adding a pore former thereto in a slurry state, if necessary, to increase the porosity, followed by kneading by use of a mixer or the like.

As the plugging material, in addition to the above ceramic material, methylcellulose, hydroxypropoxyl methylcellulose, polyethylene oxide, hydroxypropyl methylcellulose, hydroxyethyl cellulose, carboxyl methylcellulose, polyvinyl alcohol or the like may further be added.

There is not any special restriction on the type of the surfactant, but examples of the surfactant include ethylene glycol, dextrin, fatty acid soap and polyalcohol. If necessary, a pore former may be added to increase the porosity. There is not any special restriction on the type of the pore former.

Then, in one end face of the formed ceramic honeycomb article, the open frontal areas of predetermined (a part of) cells are masked, and the end face thereof is submerged into a storage container in which the above plugging material is stored. The plugging material is inserted into the cells which are not masked, thereby forming the plugged portions. Afterward, in the other end face of the formed ceramic honeycomb article, the open frontal areas of the cells which are not masked in the one end face of the article (remaining cells other than the above predetermined cells) are masked, and the end face thereof is submerged into the storage container in which the above plugging material is stored. The plugging material is inserted into the cells which are not masked, thereby forming the plugged portions. At this time, the plugging material is inserted in the zigzag manner so that the cells provided with the plugged portions and the cells which are not provided with the plugged portions are alternately arranged and so that both the end faces of the article have a checkered pattern.

There is not any special restriction on a method for masking the open frontal areas of the cells, but in a method as an example, an adhesive film is attached to the whole end face of the formed ceramic honeycomb article, and holes are made in a part of the adhesive film. For example, in a preferable example of the method, after attaching the adhesive film to the whole end face of the formed ceramic honeycomb article, holes are made by laser in only corresponding portions of the cells which are to be provided with the plugged portions. As the adhesive film, a film made of polyester, polyethylene or a resin such as a thermosetting resin and having one surface thereof coated with an adhesive may preferably be used.

Next, the formed ceramic honeycomb article having both the end faces thereof plugged in the zigzag manner is dried at 40 to 250°C for two minutes to two hours. When this formed ceramic honeycomb article is fired, the ceramic honeycomb structure having the plugging portions according to the present invention is obtained. As an example of a method for firing the formed ceramic honeycomb article, the temperature is raised up to 1350 to 1450°C in the atmosphere, thereby firing the article.

In the manufacturing method of the ceramic honeycomb structure, the formed ceramic honeycomb article may once be fired before plugged, the resultant fired ceramic honeycomb article may be plugged, and the plugged portions may be fired again to manufacture the ceramic honeycomb structure.

The above manufacturing method of the ceramic honeycomb structure is a method for manufacturing the ceramic honeycomb structure in which the partition walls and the outer wall portion to surround the partition walls are integrally formed. However, by a manufacturing method in which the partition walls are formed, the outer peripheral surface thereof is processed and the processed outer peripheral surface is newly coated with a cement outer wall containing the ceramic material as an aggregate, the ceramic honeycomb structure of an outer periphery coat type can be obtained.

There is not any special restriction on a processing method for forming the substantially elliptic or oblong cross section of the honeycomb structure, but it is possible to preferably use a method of grinding the outer peripheral portion of the honeycomb structure by use of a grindstone while moving the grindstone along a cam having a predetermined shape, or a method of grinding the outer peripheral portion of the structure while moving the grindstone under numerical control (NC).

There is not any special restriction on the method of newly coating the processed outer peripheral surface of the structure with the cement outer wall containing the ceramic material as the aggregate, but it is possible to preferably use a method of rotating the honeycomb structure while pressing a spatula along the outer peripheral surface of the honeycomb structure, to supply a cement coat material containing the ceramic material as the aggregate to a portion between the spatula and the outer peripheral surface, thereby forming a coat layer on the outer peripheral surface, or a method of spraying a mist-like coat material to the outer peripheral surface.

### [Examples]

Hereinafter, the present invention will specifically be described with respect to examples, but the present invention is not limited to these examples.

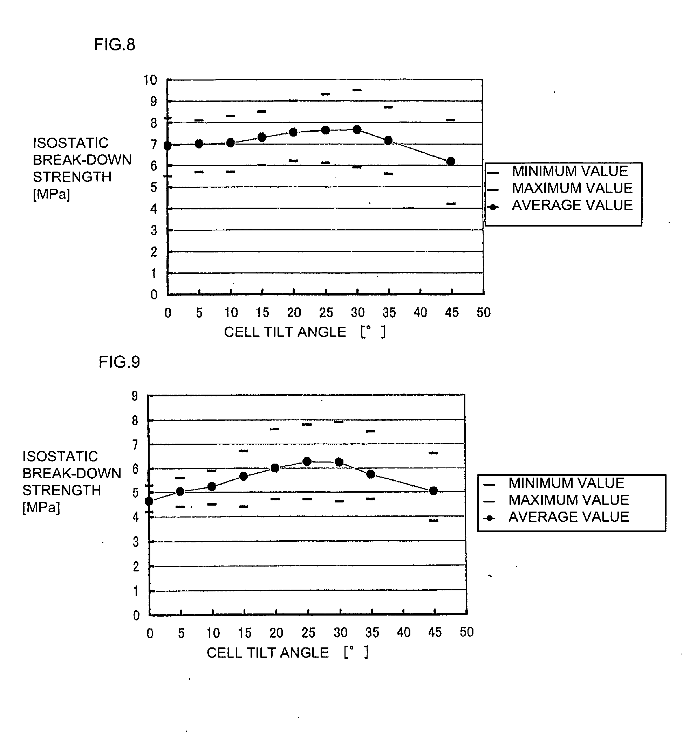

(Examples 1 to 7, Comparative Examples 1 and 2) There were prepared a plurality of ceramic honeycomb structures having cell tilt angles of 0° (Comparative Example 1), 5° (Example 1), 10° (Example 2), 15° (Example 3), 20° (Example 4), 25° (Example 5), 30° (Example 6), 35° (Example 7) and 45° (Comparative Example 2). As to five samples (Samples 1 to 5) of each of the structures, an isostatic breakdown strength was measured, and the other samples were subjected to a thermal shock resistance test. As the measurement result of the isostatic breakdown strength, minimum values, maximum values and average values are clearly indicated as shown in Table 1 and Fig. 8. Moreover, as the result of the thermal shock resistance test, it has been confirmed that the ceramic honeycomb structures of Examples 1 to 7 and Comparative Examples 1 and 2 indicate an equal resistance to thermal shock.

The ceramic honeycomb structures used in the measurement have different cell tilt angles, but have a columnar outer shape, a length of 100 mm and an elliptic sectional shape vertical to a central axis direction. The elliptic shape has a long diameter of 230 mm and a short diameter of 140 mm. The average thickness of partition walls is 0.10 mm, a cell density is 600 cells/square inch, and cells have a square sectional shape. The ceramic honeycomb structures are also common in that the partition walls are made of cordierite, and have an average porosity of 25% and that the partition walls and an outer wall portion to surround the partition walls are integrally formed.

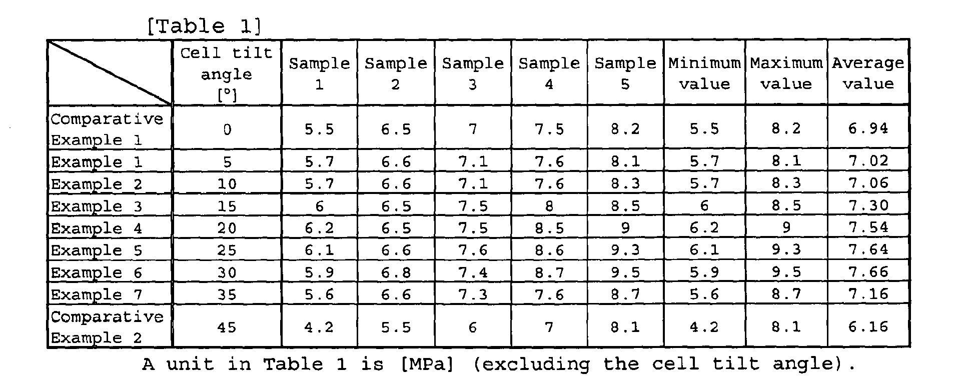

(Examples 8 to 14, Comparative Examples 3 and 4) There were prepared a plurality of ceramic honeycomb structures having cell tilt angles of 0° (Comparative Example 3), 5° (Example 8), 10° (Example 9), 15° (Example 10), 20° (Example 11), 25° (Example 12), 30° (Example 13), 35° (Example 14) and 45° (Comparative Example 4). As to five samples (Samples 1 to 5) of each of the structures, an isostatic breakdown strength was measured, and the other samples were subjected to a thermal shock resistance test. As the measurement result of the isostatic breakdown strength, minimum values, maximum values and average values are clearly indicated as shown in Table 2 and Fig. 9. Moreover, as the result of the thermal shock resistance test, it has been confirmed that the ceramic honeycomb structures of Examples 8 to 14 and Comparative Examples 3 and 4 indicate an equal resistance to thermal shock.

The ceramic honeycomb structures used in the measurement have different cell tilt angles, but have a columnar outer shape, a length of 127 mm and an elliptic sectional shape vertical to a central axis direction. The elliptic shape has a long diameter of 230 mm and a short diameter of 140 mm. The average thickness of partition walls is 0.11 mm, a cell density is 400 cells/square inch, and cells have a square sectional shape. The ceramic honeycomb structures are also common in that the partition walls are made of cordierite, and have an average porosity of 35% and that the structures are of an outer peripheral coat type. Each of the structures is obtained by forming the partition walls, processing the outer peripheral surface thereof, and coating the processed outer peripheral surface with a ceramic cement material containing cordierite as an aggregate to form an outer wall.

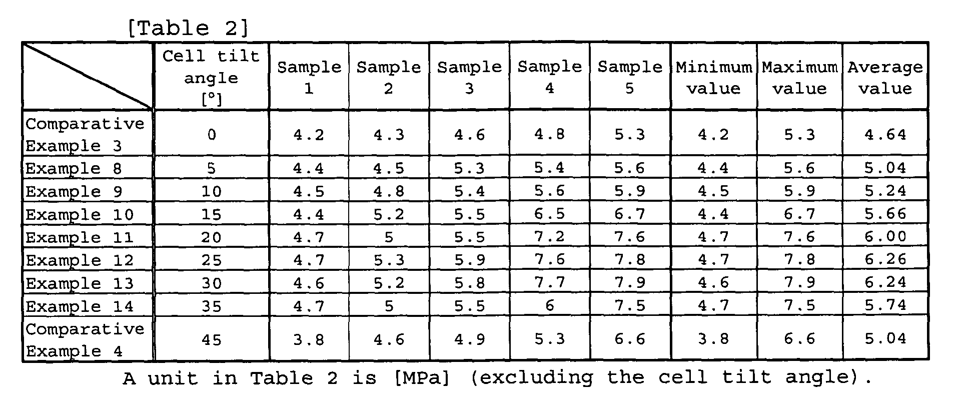

(Example 15, Comparative Example 5) A plurality of ceramic honeycomb structures having cell tilt angles of 0° (Comparative Example 5) and 20° (Example 15) were prepared. As to five samples of each of the structures, an isostatic breakdown strength was measured, and the other samples were subjected to a thermal shock resistance test.

The ceramic honeycomb structures used in the measurement have different cell tilt angles, but have a columnar outer shape, a length of 200 mm and an elliptic sectional shape vertical to a central axis direction. The elliptic shape has a long diameter of 230 mm and a short diameter of 180 mm. The average thickness of partition walls is 0.33 mm, a cell density is 200 cells/square inch, and cells have a square sectional shape. The ceramic honeycomb structures are also common in that the partition walls are made of cordierite, and have an average porosity of 60% and that the both end faces of each structure are alternately plugged in a zigzag manner. Moreover, the outer periphery of the structure is coated with a ceramic cement material containing cordierite as an aggregate, thereby forming an outer wall.

[Measurement of Isostatic Breakdown Strength] The strength was measured based on an isostatic breakdown strength test by a method regulated by Car Standard (JASO Standard) M505-87 issued by Society of Automotive Engineers of Japan.

The isostatic breakdown strength test is a test of disposing the ceramic honeycomb structure in a rubber cylindrical container and closing the container with an aluminum plate as a lid, thereby performing isotropic pressurizing compression in water. The test simulates a compressive load in a case where the outer peripheral surface of the ceramic honeycomb structure is held in a can member of a converter. The isostatic breakdown strength is indicated by a pressurizing pressure value when the ceramic honeycomb structure breaks down. In a catalyst converter for purifying an exhaust gas from a car, a canning structure is usually employed in which the outer peripheral surface of the ceramic honeycomb structure is held. Needless to say, the isostatic breakdown strength is preferably high from the viewpoint of the canning.

### [Thermal Shock Resistance Test]

The test was performed based on a method regulated by JASO standard M505-87. First, the ceramic honeycomb structure having room temperature was disposed in an electric furnace kept at a predetermined temperature which was higher than the room temperature, held therein for 30 minutes, and then the ceramic honeycomb structure was taken out onto a firebrick. Then, an appearance was observed, and the outer peripheral portion of the ceramic honeycomb structure was tapped with a metal rod to confirm the presence/absence of cracking. When the cracking was not observed and tapping sound was not dull metallic clank, the structure was judged to pass the test. Subsequently, every time a temperature in the electric furnace was successively raised as much as 50°C stepwise, a similar check was repeated until the structure failed the test.

### (Consideration 1)

It has been confirmed from the results of Examples 1 to 14 and Comparative Examples 1 to 4 shown in Figs. 8 and 9 and Tables 1 and 2 that especially when the cell tilt angle is 5° or more in the ceramic honeycomb structure, the isostatic breakdown strength tends to increase. It has been seen that in a case where the cell tilt angle becomes 45°, the isostatic breakdown strength becomes equal (returns) or indicates a small value as compared with a case where the cell tilt angle is 5°. Moreover, as described above, it has been confirmed from the result of the thermal shock resistance test that the ceramic honeycomb structures of Examples 1 to 14 and Comparative Examples 1 to 4 indicate the same resistance to thermal shock.

It is to be noted that the results of Example 15 and Comparative Example 5 are not shown, but it was possible to confirm results similar to those of Examples 1 to 14 and Comparative Examples 1 to 4. As to the result of the thermal shock resistance test, it has been confirmed that the ceramic honeycomb structures of Example 15 and Comparative Example 5 indicates the same resistance to thermal shock.

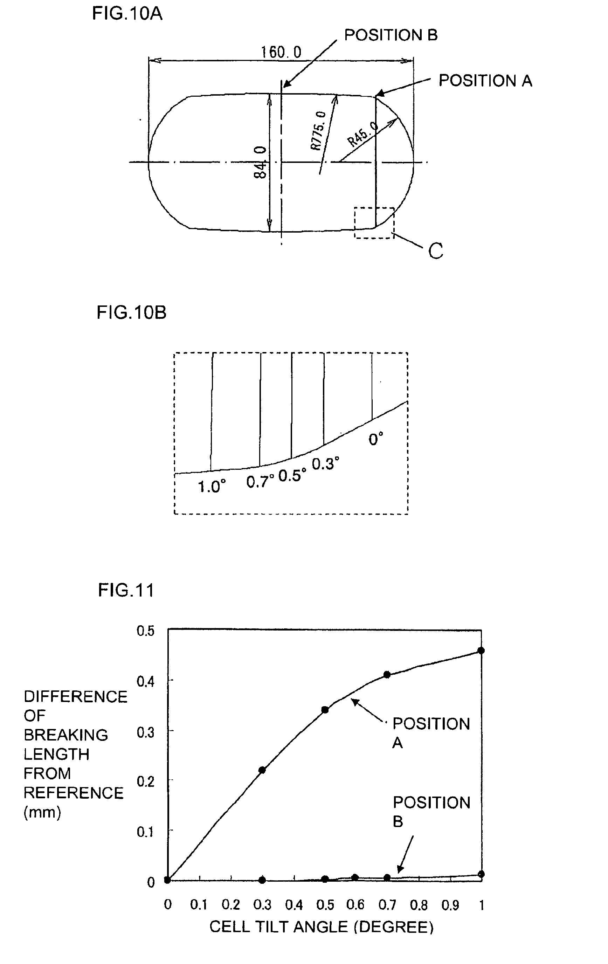

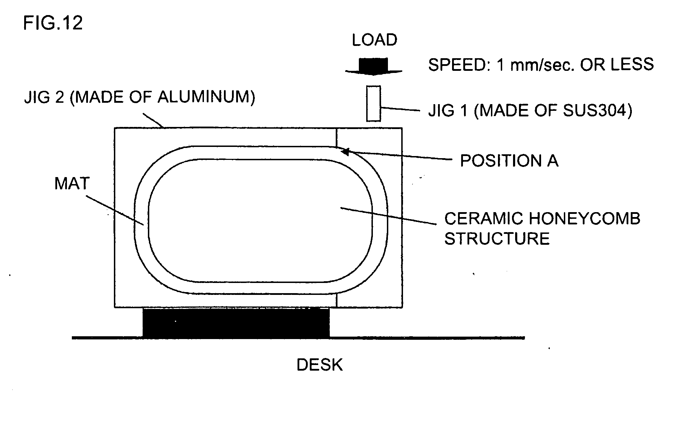

(Examples 16 and 17, Comparative Example 6) Ceramic honeycomb structures having cell tilt angles of 0° (reference), 0.3° (Comparative Example 6), 0.5° (Example 16) and 1° (Example 17) were prepared. By use of an all-purpose material tester manufactured by INSTRON Co., Ltd shown in Fig. 12, a pressure was applied to a jig 2 at a constant speed (1 mm/second or less) by a jig 1, whereby an offset load was applied to each ceramic honeycomb structure to cut off the structure. In the structure, lengths (cut-off lengths) and cut-off strengths of cut-off surfaces were measured at a position B corresponding to the position of a short axis (see Fig. 10A, a long diameter portion) and a position A corresponding to a position in the vicinity of an end in a long axis direction (see Figs. 10A and 10B, a short diameter portion). Fig. 12 shows a case where cut-off is caused at the position A. The cut-off length was compared with that at the cell tilt angle of 0° (reference), and obtained as a difference from the reference (the difference of the cut-off length from the reference). Results are shown in Table 3 and Fig. 11.

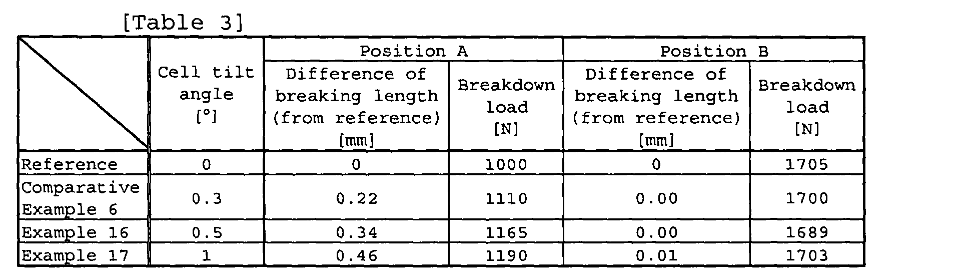

The ceramic honeycomb structures used in the measurement have different cell tilt angles, but have a columnar outer shape, a length of 100 mm and an oblong (race track-like) sectional shape vertical to a central axis direction. The oblong shape has a long diameter of 160 mm and a short diameter of 84 mm, a large circle has a radius of 775 mm, a small circle has a radius of 45 mm, and a joint between the large circle and the small circle is smoothed. The average thickness of partition walls is 0.10 mm, a cell density is 600 cells/square inch, and cells have a square sectional shape. The ceramic honeycomb structures are also common in that the partition walls are made of cordierite, and have an average porosity of 25% and that the outer periphery of the structure is coated with a ceramic cement material containing cordierite as an aggregate, thereby forming an outer wall.

### (Consideration 2)

When the curvature radius of the outer contour curve of the ceramic honeycomb structure is excessively large, the cross section has a substantially oblong (race track-like) shape. However, when the structure is horizontally long in the long axis direction, the curvature radius is comparatively small at an end position in the long axis direction. Even when an angle formed by the partition walls with respect to the short axis direction (the cell tilt angle) is small, the increase ratio of the length of the cut-off surface is supposed to be effectively large, and the breakdown at a low value tends to decrease. When the cell tilt angle is increased, the effect is exerted over the whole honeycomb structure. However, when the cell tilt angle is less than 0.5°, for example, 0.3°, the effect of the cell tilt angle is exerted less. In consequence, it was possible to confirm the superiority of the strength of the ceramic honeycomb structure of the present invention against the offset overload at the cell tilt angle of 0.5° or more.

The ceramic honeycomb structure of the present invention can preferably be used as a catalyst carrier or a filter for purifying an exhaust gas from any of various internal combustion engine typified by an exhaust gas from a car, a filter for various filtering devices, a carrier for a heat exchange unit, or a carrier for a chemical reaction device, for example, a carrier for a reforming catalyst of a fuel cell.

## Claims

1. A ceramic honeycomb structure comprising porous partition walls which form a plurality of cells as through channels for a fluid and an outer wall which surrounds the partition walls, and having a columnar outer shape and an elliptic or oblong cross section vertical to the central axis direction thereof,
wherein an angle formed by the partition walls with respect to a short axis of the shape of the cross section in the cross section vertical to the central axis direction is 0.5° or more and 35° or less.

2. The ceramic honeycomb structure according to claim 1, wherein the angle is 5° or more and 35° or less.

3. The ceramic honeycomb structure according to claim 1 or 2 further comprising:
plugged portions which plug open frontal areas of predetermined cells among the plurality of cells in one end face of the structure and open frontal areas of the remaining cells in the other end face thereof,
wherein the plugged portions are provided so that the predetermined cells and the remaining cells are alternately disposed.

4. The ceramic honeycomb structure according to any one of claims 1 to 3, wherein the partition walls have an average thickness of 0.8 mm or less.

5. The ceramic honeycomb structure according to any one of claims 1 to 4, wherein the partition walls have an average porosity of 10% or more.

6. The ceramic honeycomb structure according to any one of claims 1 to 5, wherein a material of the partition walls contains, as a main component, one or more selected from a material group consisting of cordierite, lithium aluminum silicate, aluminum titanate, alumina, zirconia, silicon carbide, silicon nitride, activated carbon, silica gel and zeolite.

7. The ceramic honeycomb structure according to any one of claims 1 to 6, wherein the shape of the cross sections of the predetermined cells vertical to a longitudinal direction thereof is different from that of the cross sections of the remaining cells vertical to the longitudinal direction.

8. The ceramic honeycomb structure according to any one of claims 1 to 7, wherein a relation of A < B is satisfied, in which A (mm²) is the total of areas of the cross sections of the predetermined cells vertical to the longitudinal direction, and B (mm²) is the total of areas of the cross sections of the remaining cells vertical to the longitudinal direction.

9. The ceramic honeycomb structure according to any one of claims 1 to 6, wherein the shape of the cross sections of all the cells vertical to the longitudinal direction is a quadrangular shape.
